# EUROPEAN PATENT SPECIFICATION

(11) **EP 2 506 540 B1**
(45) Date of publication and mention of the grant of the patent: **17.09.2014**
(21) Application number: 11159999.9
(22) Date of filing: 28.03.2011
(51) Int. Cl.: H04M 1/2745, G06F 17/30

(54) **Enhanced contact information**
Erweiterte Kontaktinformationen
Informations de contact enrichies

(43) Date of publication of application: 03.10.2012
(73) Proprietor: TeliaSonera AB, 106 63 Stockholm (SE)
(72) Inventor: Lehtonen, Rami, 37800, Toijala (FI); Kivirauma, Kimmo, 36100, Kangasala AS (FI)
(74) Representative: Papula Oy

(56) References cited:
- GB-A- 2 419 974
- US-A1- 2004 107 189
- US-A1- 2005 137 991
- US-A1- 2010 106 724
- US-B1- 7 899 796

## Description

### FIELD OF THE INVENTION

The invention relates to mobile communications. More particularly, the present invention relates to electronic address books used for example in mobile phones.

### BACKGROUND OF THE INVENTION

Managing the contact information in mobile phones requires a lot of manual work. Contact information may be stored in a non-efficient and nonuniform way. For example names may be written in lowercase letters, wrong fields or in capital letters (e.g. contact A first name = "alice jones", contact B surname = "smith bob", contact C firstname = "CHARLIE" lastname = "JONES").

The contact book may contain tens or even hundreds of contacts. It is important for the user of a mobile phone to be able to find the most relevant contact information as quickly as possible.

The prior art offers tools to organize contact information in various ways and enrich the information from different sources. For example US7711106 discloses adding contacts to a personal network address book by extracting telephone number from billing database/call data record storage unit if information meets preset criteria and adding extracted number to address book.

US7899796B1 discloses a batch blocking, which takes a set of records and generates sets of potentially matching records for the entire set. The blocks of potential matches are then passed to a matching process to evaluate which records match. Applications include individual matching such as student identification, householding, business matching, supply chain matching, financial matching, news or text matching, and other applications.

US2010/106724A1 discloses a method for clustering data elements stored in a data storage system. Clusters of data elements are formed with each data element being a member of at least one cluster. At least one data element is associated with two or more clusters. Membership of the data element belonging to respective ones of the two or more clusters is represented by a measure of ambiguity. Information is stored in the data storage system to represent the formed clusters.

US2004/107189A1 discloses a system for identifying similarities in data. The system includes a collection of records, a plurality of transform functions, and a cell list structure.

US2005/137991A1 discloses a method of correcting postal name and address information. The name and address information is compared to at least one database of known names and associated addresses to determine if the name and address information matches a known postal recipient. If no match is found, the name and address information is corrected by comparing fields of the name and address information with corresponding fields from the database of known names and addresses, and deducing an incorrect or missing field in the name and address information.

GB2419974A discloses a method of calculating the quality of a data record having a plurality of data fields. Individual fields in the data record that are incorrect are identified and scored accordingly. Further fields are identified where any one or more of those fields may be incorrect, but it is not immediately possible to determine which one or ones. These further fields are also scored accordingly. A score for the data record as a whole is then calculated based on the scores assigned to individual fields. Different fields may be weighted according to their importance to the data record as a whole.

### PURPOSE OF THE INVENTION

The purpose of the invention is to present a new method and apparatus for organizing information in an electronic address book. The invention improves the user experience when using the address book of the mobile phone. Properly arranged address book improves also known methods and applications for utilizing it, as the information is stored in standardized manner.

### SUMMARY

The invention discloses a method according to claim 1, an apparatus according to claim 7 and a computer program according to claim 14 for enhancing contact information for an electronic address book. The method comprises the steps of collecting contact information for an electronic address book; comparing a name from any field in said contact information to a database comprising name information; identifying a first name or a surname from the contact information; and relocating in the contact information the identified first name to a field assigned to first names or the surname to a field assigned to surnames as a response to a name identified in a wrong field. This method organizes both first and surnames to the fields assigned for them. The database may comprise all common first names for recognizing the character string of a first name. The surname may be the unidentified portion of the name or a common surname found in the database.

In one embodiment the contact information is standardized also by capitalizing the first name or the surname in the contact information. This method applies when the name has been stored to the address book with more than one upper-case letter in the beginning or without the upper-case letter in the beginning. Common parts of a name that are commonly written in lower-case letters may not be converted. Examples of such parts are "de", "von", "la", etc.

In one embodiment duplicate contacts are identified in different contact information entries. These are combined to single contact information. One person may have several contact information entries with different fields filled in. In this manner all information relating to one person can be found under single contact information.

In one embodiment the phone number format of the contact information is converted to a predefined international format. Many times the user may store a phone number in domestic format without the international portion, for example +358 in Finland. The predetermined format refers to the mobile operator's country where the majority of user's contacts are presumably located or the user may define the country. For the user this may be presented as a flag of the country, since it is not necessary for the user to know the actual country codes.

In one embodiment contact information is collected to a computer connected to Internet from a mobile communication apparatus. The mobile communication apparatus, such as a mobile phone is connected to an Internet service. The electronic address book of the mobile phone is modified via a web page.

In one embodiment at least two sets of contact information are grouped based on similar name field content or other similar field, e.g. similar email address, similar phone number and information obtained from at least one external database comprising similar information.

The invention discloses also an apparatus for communication, comprising at least one processor and at least one memory comprising program code, wherein the at least one memory and the computer program code are configured to, with the at least one processor, cause the apparatus to execute the steps of the method claims according to the invention. The invention discloses also a computer program, comprising code for collecting contact information for an electronic address book; code for comparing a name from any field in said contact information to a database comprising name information; and code for identifying a first name or a surname from the contact information when the computer program is run on a processor. Also in one aspect of the invention the computer program is a computer program product comprising a computer-readable medium bearing computer program code embodied therein for use with a computer.

The benefits of the invention are better user experience for a mobile phone's electronic address book. The address book may be modified at a large computer screen instead of a limited mobile screen. The invention also improves the functionality of electronic address book when used by or with other applications comprising automated processes.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment of the present invention, and
**Fig. 2** is an example of a web service according to the present invention.

### DETAILED DESCRIPTION OF THE INVENTION

Reference will now be made in detail to the embodiments of the present invention, examples of which are illustrated in the accompanying drawings.

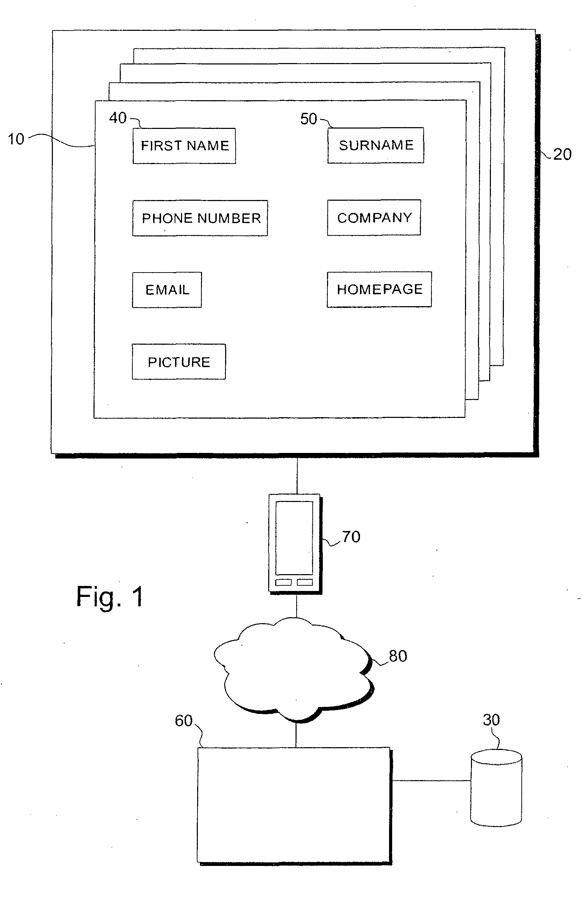

Figure 1 illustrates a simplified block diagram comprising the elements related to the present invention. An electronic address book 20 is used for example with mobile devices 70 such as mobile phones, PDA devices and such. The electronic address book 20 is used for storing contact information 10 about friends, family members, colleagues, business contacts, etc. A single contact information entry 10 comprises several information elements or data fields for the contact, such as the first name, surname, phone number to one or more subscription, company name, Internet URL, picture or alike.

The mobile device 70 may be connected to Internet 80 via data network in any method known in the art. A computer 60 may be configured to connect to the mobile device 70 via Internet. In another embodiment the mobile device 70 is connected to the computer 60 via separate cable and the data transfer is executed by synchronizing the mobile device 70 with the computer 60. In yet another embodiment the mobile device 70 is connected to a second computer via cable and the second computer is connected to the computer 60 via Internet. The synchronization can be done locally to a second computer, which handles the data transfer to the computer 60. The electronic contact book 20 can be transferred from the mobile device 70 to the computer 60 with known methods such as SyncML/OMADS protocol.

The computer 60 is connected to a database 30, which comprises name information. The name information comprises most common first names and surnames. Names may comprise several nationalities and the computer or the database may comprise means for differentiating different names in different contexts.

The contact information 10 is collected to the computer 60 by one or more entries or by a complete electronic address book 20 comprising all available contact informations 10 from the mobile device 70. In one embodiment the computer 60 is configured to operate as a web service comprising a user interface available to the user of the mobile device 70. The web service 60 compares the collected names to the database 30 and identifies either the first names or surnames from the contact information 10. The database 30 may be a single entity, distributed to several databases or comprise from separate databases. If the identification indicates that a first name or a surname is in the wrong field, the web service 60 proposes a correction to the user. The user may then accept or reject the proposed correction via the user interface. In one embodiment the operation is automatic such that the user is not prompted to verify all changes or at least part of the changes.

The computer or web service 60 may comprise also other applications for enhancing the electronic address book 20. Sometimes the user may have stored the names in all lower-case letters or all capital letters. The web service is configured to recognize the situation, where a name comprises more than one capital letter or a lower-case letter in the beginning. The web service 60 proposes a correction to the user, which the user may accept or reject or the functionality may be implemented without the need of user interaction in all steps. Duplicate contacts may be combined together and the user is requested to decide the correct form of the combined contact information. Phone numbers lacking an international number format are also converted to comprise the prefix for an international format. The default international code offered by the service may be the home operator's own country code or any other code that the user may submit to the system. The user can also easily select an international code for a contact's phone number by selecting a flag icon representing certain country accordingly. The system has a database which maps the flag icons to the appropriate international code.

After all necessary modifications have been made to the contact information 10 or the complete electronic address book 20 the modified contact information 20 is transferred or synchronized back to the mobile device 70.

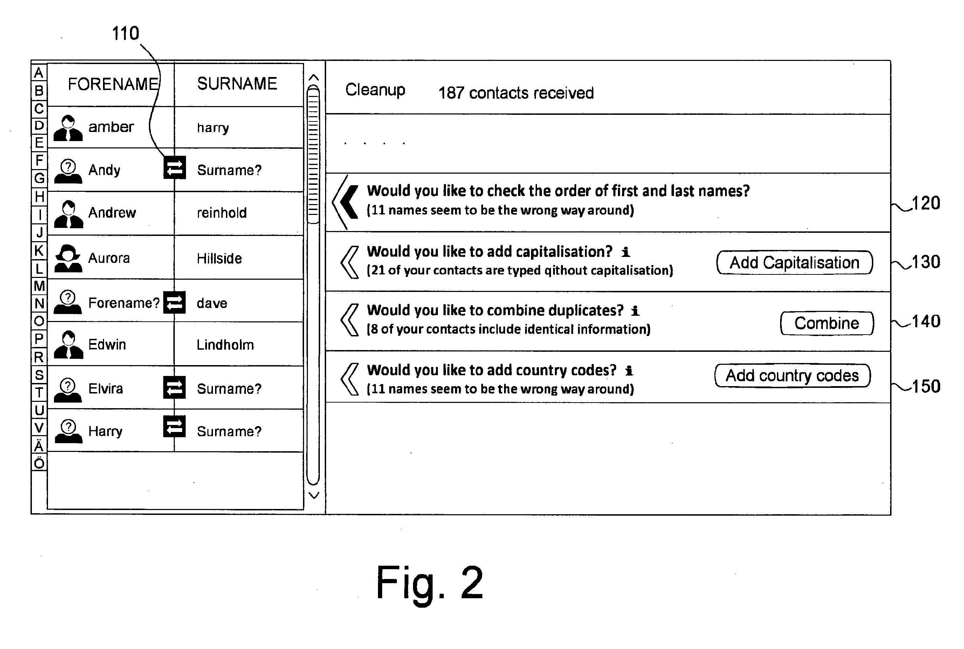

Figure 2 illustrates an example of a web service according to the present invention. The user interface prompts the user to examine the order of first names and last names, i.e. surnames, block 120. Possible candidates have been highlighted by an arrow symbol 110. The user may change the position of the first name and the surname by clicking the arrow 110.

The user may also select other means to modify the electronic address book 20. Block 130 enables the capitalization of the contact information 10, where the first letter of a name is modified to uppercase letter and the rest are modified to lowercase letters. Block 140 enables the search for duplicate contacts, where different information contained by separate contact informations 10 having similar names are combined to a single contact information 10. Block 150 enables adding a country code to contact information 10.

The user interface according to Figure 2 may be implemented on a computer 60 that is hosting the web service. It may also be implemented into the mobile phone 70, where the connections between the electronic address book 20 and the computer 70 are implemented by the internal circuitry of the mobile phone 70.

Embodiments of the present invention may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

If desired, the different functions discussed herein may be performed in a different order and/or concurrently with each other.

## Claims

1. A method, comprising:
collecting contact information (10) for an electronic address book (20);
comparing a name from any field in said contact information (10) to the most common first names (40) and surnames comprised in a database (30);
identifying a first name (40) or a surname (50) from the contact information (10);
relocating in the contact information (10) the identified first name (40) to a field assigned to first names or the surname (50) to a field assigned to surnames as a response to a first name (40) or a surname (50) identified in a wrong field.

2. The method according to claim 1, **characterized by** capitalizing the first name (40) or the surname (50) in the contact information (10).

3. The method according to claim 1, **characterized by** identifying duplicate contacts in different contact information (10) and combining said contact informations (10) to a single contact information (10).

4. The method according to claim 1, **characterized by** converting the phone number format of the contact information (10) to a predefined international format.

5. The method according to claim 1, **characterized by** collecting contact information (10) to a computer (60) connected to Internet (80) from a mobile communication apparatus (70).

6. The method according to claim 1, **characterized by** grouping at least two sets of contact information (10) based on similar name field content and information obtained from at least one external database (30) comprising similar information.

7. An apparatus for communication, comprising at least one processor and at least one memory comprising program code, wherein the at least one memory and the computer program code are configured to, with the at least one processor, cause the apparatus to:
collect contact information (10) for an electronic address book (20);
compare a name from any field in said contact information (10) to the most common first names (40) and surnames (50) comprised in a database (30);
identify a first name or a surname (50) from the contact information (10);
relocate in the contact information (10) the identified first name (40) to a field assigned to first names or the surname (50) to a field assigned to surnames as a response to a first name (40) or a surname (50) identified in a wrong field.

8. The apparatus according to claim 7, **characterized by** the apparatus comprising means for capitalizing the first name (40) or the surname (50) in the contact information (10).

9. The apparatus according to claim 7, **characterized by** the apparatus comprising means for identifying duplicate contacts in different contact information (10) and combining said contact informations (10) to a single contact information (10).

10. The apparatus according to claim 7, **characterized by** the apparatus comprising means for converting the phone number format of the contact information (10) to a predefined international format.

11. The apparatus according to claim 7, **characterized by** the apparatus being a computer (60) connected to Internet (80) and comprising means for collecting contact information (10) from a mobile communication apparatus (70).

12. The apparatus according to claim 7, **characterized by** the apparatus being a mobile communication apparatus (70) comprising means for collecting most common first names (40) and surnames (50) from a database (30) connected to the mobile apparatus (70) by a wireless data network.

13. The apparatus according to claim 7, **characterized by** the apparatus comprising means for grouping at least two sets of contact information (10) based on similar name field content and information obtained from at least one external database (30) comprising similar information.

14. A computer program, comprising:
code for collecting contact information (10) for an electronic address book (20);
code for comparing a name from any field in said contact information (10) to the most common first names (40) and surnames (50) comprised in a database (30);
code for identifying a first name (40) or a surname (50) from the contact information (10); and
code for relocating in the contact information (10) the identified first name (40) to a field assigned to first names or the surname (50) to a field assigned to surnames as a response to a first name (40) or a surname (50) identified in a wrong field;
when the computer program is run on a processor.

15. The computer program according to claim 14, wherein the computer program is a computer program product comprising a computer-readable medium bearing computer program code embodied therein for use with a computer.

## Patentansprüche

1. Verfahren, umfassend:
Erfassen von Kontaktinformationen (10) für ein elektronisches Adressbuch (20) ;
Vergleichen eines Namens aus einem beliebigen Feld in den Kontaktinformationen (10) mit den in einer Datenbank (30) enthaltenen häufigsten Vornamen (40) und Nachnamen;
Identifizieren eines Vornamens (40) oder eines Nachnamens (50) aus den Kontaktinformationen (10);
Verschieben in den Kontaktinformationen (10) des identifizierten Vornamens (40) in ein Vornamen zugeordnetes Feld oder des identifizierten Nachnamens (50) in ein Nachnamen zugeordnetes Feld als Reaktion auf einen in einem falschen Feld identifizierten Vornamen (40) oder Nachnamen (50).

2. Verfahren nach Anspruch 1, **gekennzeichnet durch** Großschreiben des Vornamens (40) oder des Nachnamens (50) in den Kontaktinformationen (10).

3. Verfahren nach Anspruch 1, **gekennzeichnet durch** Identifizieren von Doppelkontakten in unterschiedlichen Kontaktinformationen (10) und Kombinieren der Kontaktinformationen (10) zu einer einzelnen Kontaktinformation (10).

4. Verfahren nach Anspruch 1, **gekennzeichnet durch** Umwandeln des Telefonnummernformats der Kontaktinformationen (10) in ein vorher festgelegtes internationales Format.

5. Verfahren nach Anspruch 1, **gekennzeichnet durch** Erfassen von Kontaktinformationen (10) für einen mit dem Internet (80) verbundenen Computer (60) von einem mobilen Kommunikationsgerät (70).

6. Verfahren nach Anspruch 1, **gekennzeichnet durch** Anordnen zumindest zweier Mengen von Kontaktinformationen (10) in Gruppen, basierend auf ähnlichem Inhalt des Namensfeldes und I nformationen, die aus mindestens einer externen Datenbank (30) erhalten wurden, die ähnliche Informationen umfasst.

7. Vorrichtung zur Kommunikation, umfassend mindestens einen Prozessor und mindestens einen Speicher, der einen Programmcode enthält, wobei der mindestens eine Speicher und der Computerprogrammcode konfiguriert sind, um mit dem mindestens einen Prozessor zu bewirken, dass die Vorrichtung:
Kontaktinformationen (10) für ein elektronisches Adressbuch (20) erfasst;
einen Namen aus einem beliebigen Feld in den Kontaktinformationen (10) mit den in einer Datenbank (30) enthaltenen häufigsten Vornamen (40) und
Nachnamen (50) vergleicht;
einen Vornamen oder einen Nachnamen (50) aus den Kontaktinformationen (10) identifiziert;
in den Kontaktinformationen (10) den identifizierten Vornamen (40) in ein Vornamen zugeordnetes Feld oder den Nachnamen (50) in ein Nachnamen zugeordnetes Feld als Reaktion auf einen in einem falschen Feld identifizierten Vornamen (40) oder Nachnamen (50) verschiebt.

8. Vorrichtung nach Anspruch 7, **dadurch gekennzeichnet, dass** die Vorrichtung Mittel zum Großschreiben des Vornamens (40) oder des Nachnamens (50) in den Kontaktinformationen (10) umfasst.

9. Vorrichtung nach Anspruch 7, **dadurch gekennzeichnet, dass** die Vorrichtung Mittel zum Identifizieren von Doppelkontakten in unterschiedlichen Kontaktinformationen (10) und zum Kombinieren der Kontaktinformationen (10) zu einer einzelnen Kontaktinformation (10) umfasst.

10. Vorrichtung nach Anspruch 7, **dadurch gekennzeichnet, dass** die Vorrichtung Mittel zum Umwandeln des Telefonnummernformats der Kontaktinformationen (10) in ein vorher festgelegtes internationales Format umfasst.

11. Vorrichtung nach Anspruch 7, **dadurch gekennzeichnet, dass** die Vorrichtung ein mit dem Internet (80) verbundener Computer (60) ist und Mittel zum Erfassen von Kontaktinformationen (10) von einem mobilen Kommunikationsgerät (70) aufweist.

12. Vorrichtung nach Anspruch 7, **dadurch gekennzeichnet, dass** die Vorrichtung ein mobiles Kommunikationsgerät (70) ist, das Mittel zum Erfassen von häufigsten Vornamen (40) und Nachnamen (50) aus einer Datenbank (30) aufweist, die durch ein drahtloses Datennetz mit dem mobilen Gerät (70) verbunden ist.

13. Vorrichtung nach Anspruch 7, **dadurch gekennzeichnet, dass** die Vorrichtung Mittel zum Anordnen zumindest zweier Mengen von Kontaktinformationen (10) in Gruppen, basierend auf ähnlichem Inhalt des Namensfeldes und I nformationen, die aus mindestens einer externen Datenbank (30) erhalten wurden, die ähnliche I nformationen umfasst, aufweist.

14. Computerprogramm, umfassend:
Code zum Erfassen von Kontaktinformationen (10) für ein elektronisches Adressbuch (20);
Code zum Vergleichen eines Namens aus einem beliebigen Feld in den Kontak-tinformationen (10) mit den in einer Datenbank (30) enthaltenen häufigsten Vornamen (40) und Nachnamen (50);
Code zum Identifizieren eines Vornamens (40) oder eines Nachnamens (50) aus den Kontaktinformationen (10); und
Code zum Verschieben in den Kontaktinformationen (10) des identifizierten Vornamens (40) in ein Vornamen zugeordnetes Feld oder des Nachnamens (50) in ein Nachnamen zugeordnetes Feld als Reaktion auf einen in einem falschen Feld identifizierten Vornamen (40) oder Nachnamen (50), wenn das Computerprogramm auf einem Prozessor abgearbeitet wird.

15. Computerprogramm nach Anspruch 14, wobei das Computerprogramm ein Computerprogrammprodukt ist, das ein computerlesbares Medium umfasst, das einen Computerprogrammcode trägt, der darin zur Verwendung mit einem Computer aufgenommen ist.

## Revendications

1. Procédé, comprenant :
collecter des informations de contact (10) pour un carnet d'adresses électronique (20) ;
comparer un nom provenant d'un champ quelconque dans lesdites informations de contact (10) aux prénoms (40) et noms de famille les plus courants contenus dans une base de données (30) ;
identifier un prénom (40) ou un nom de famille (50) à partir des informations de contact (10) ;
dans les informations de contact (10), transférer le prénom (40) identifié vers un champ attribué aux prénoms (50) ou le nom de famille (50) vers un champ attribué aux noms de famille, en réponse à un prénom (40) ou à un nom de famille (50) identifié dans un champ incorrect.

2. Procédé selon la revendication 1, **caractérisé par** la mise en majuscules du prénom (40) ou du nom de famille (50) dans les informations de contact (10).

3. Procédé selon la revendication 1, **caractérisé par** l'identification des contacts en double dans différentes informations de contact (10) et la combinaison desdites informations de contact (10) en une seule information de contact (10).

4. Procédé selon la revendication 1, **caractérisé par** la conversion du format de numéro téléphonique des informations de contact (10) en un format international prédéfini.

5. Procédé selon la revendication 1, **caractérisé par** la collecte d'informations de contact (10) sur un ordinateur (60) connecté à Internet (80) à partir d'un appareil de communication mobile (70).

6. Procédé selon la revendication 1, **caractérisé par** le regroupement d'au moins deux ensembles d'informations de contact (10) sur la base d'un contenu de champ de nom similaire et d'informations obtenues à partir d'au moins une base de données externe (30) comprenant des informations similaires.

7. Appareil de communication, comprenant au moins un processeur et au moins une mémoire comprenant un code de programme, dans lequel la au moins une mémoire et le code de programme informatique sont configurés pour, avec le au moins un processeur, amener l'appareil à :
collecter des informations de contact (10) pour un carnet d'adresses électronique (20) ;
comparer un nom provenant d'un champ quelconque dans lesdites informations de contact (10) aux prénoms (40) et noms de famille (50) les plus courants contenus dans une base de données (30) ;
identifier un prénom ou un nom de famille (50) à partir des informations de contact (10) ;
dans les informations de contact (10), transférer le prénom (40) identifié vers un champ attribué à des prénoms ou le nom de famille (50) vers un champ attribué à des noms de famille, en réponse à un prénom (40) ou à un nom de famille (50) identifié dans un champ incorrect.

8. Appareil selon la revendication 7, **caractérisé en ce que** l'appareil comprend des moyens pour mettre en majuscules le prénom (40) ou le nom de famille (50) dans les informations de contact (10).

9. Appareil selon la revendication 7, **caractérisé en ce que** l'appareil comprend des moyens pour identifier des contacts en double dans différentes informations de contact (10) et combiner lesdites informations de contact (10) en une seule information de contact (10).

10. Appareil selon la revendication 7, **caractérisé en ce que** l'appareil comprend des moyens pour convertir le format de numéro téléphonique des informations de contact (10) en un format international prédéfini.

11. Appareil selon la revendication 7, **caractérisé en ce que** l'appareil est un ordinateur (60) connecté à Internet (80) et comprend des moyens pour collecter des informations de contact (10) provenant d'un appareil de communication mobile (70).

12. Appareil selon la revendication 7, **caractérisé en ce que** l'appareil est un appareil de communication mobile (70) comprenant des moyens pour collecter les prénoms (40) et noms de famille (50) les plus courants provenant d'une base de données (30) connectée à l'appareil mobile (70) par un réseau de données sans fil.

13. Appareil selon la revendication 7, **caractérisé en ce que** l'appareil comprend des moyens pour regrouper au moins deux ensembles d'informations de contact (10) sur la base d'un contenu de champ de nom similaire et d'informations obtenues à partir d'au moins une base de données externe (30) comprenant des informations similaires.

14. Programme informatique, comprenant :
du code pour collecter des informations de contact (10) pour un carnet d'adresses électronique (20) ;
du code pour comparer un nom provenant d'un champ quelconque dans lesdites informations de contact (10) aux prénoms (40) et noms de famille (50) les plus courants contenus dans une base de données (30) ;
du code pour identifier un prénom (40) ou un nom de famille (50) à partir des informations de contact (10) ; et
du code pour transférer dans les informations de contact (10), le prénom (40) identifié vers un champ attribué aux prénoms ou le nom de famille (50) vers un champ attribué aux noms de famille, en réponse à un prénom (40) ou à un nom de famille (50) identifié dans un champ incorrect ;
lorsque le programme informatique est exécuté sur un processeur.

15. Programme informatique selon la revendication 14, dans lequel le programme informatique est un produit de programme informatique comprenant un média lisible par ordinateur portant un code de programme informatique mis en oeuvre dans celui-ci en vue d'une utilisation avec un ordinateur.
